Europäisches Patentamt

European Patent Office

Office européen des brevets

(19)

(11) Numéro de publication: **0 194 173**
**A2**

(12) # DEMANDE DE BREVET EUROPEEN

(21) Numéro de dépôt: **86400228.2**

(22) Date de dépôt: **04.02.86**

(51) Int. Cl.⁴: **B23Q 1/02 , B23Q 1/24**

(30) Priorité: **04.02.85 FR 8501511**

(43) Date de publication de la demande:
**10.09.86 Bulletin 86/37**

(84) Etats contractants désignés:
**DE FR GB IT**

(71) Demandeur: **C.E.C.M.O., Société à responsabilité limitée dite :**
**Chemin de Rumigny**
**F-80680 Saint-Fuscien(FR)**

(72) Inventeur: **Line, Henri**
**Le Farfadet Route Notre-Dame**
**F-06330 Rocquefort les Pins(FR)**

(74) Mandataire: **Caunet, Jean et al**
**Cabinet BEAU DE LOMENIE 55, rue d'Amsterdam**
**F-75008 Paris(FR)**

(54) **Machine-outil pour le fraisage, l'alésage et le perçage, à tête coulissante verticale.**

(57) Machine-outil pour le fraisage, l'alésage et le perçage, comportant une tête coulissante verticale. Elle comprend un massif de support (17) reposant sur le sol et présentant deux plans de support (18, 19) décalés en hauteur et latéralement, le plan supérieur (18) supportant un banc (20) portant des glissières (21) sur lesquelles se déplace horizontalement une traverse mobile (22) sur laquelle est monté un chariot (24) coulissant horizontalement qui porte une tête porte-outil (25) coulissant verticalement, ladite traverse (22) se déplaçant longitudinalement au-dessus d'une table fixe (26) ou taque montée sur le plan inférieur (19) du massif de support (17).

L'invention est utilisée dans les machines-outils.

Fig. 5

Rank Xerox

Machine-outil pour le fraisage, l'alésage et le perçage, à tête coulissante verticale.

La présente invention a pour objet une machine-outil pour le fraisage, l'alésage et le perçage, à tête coulissante verticale.

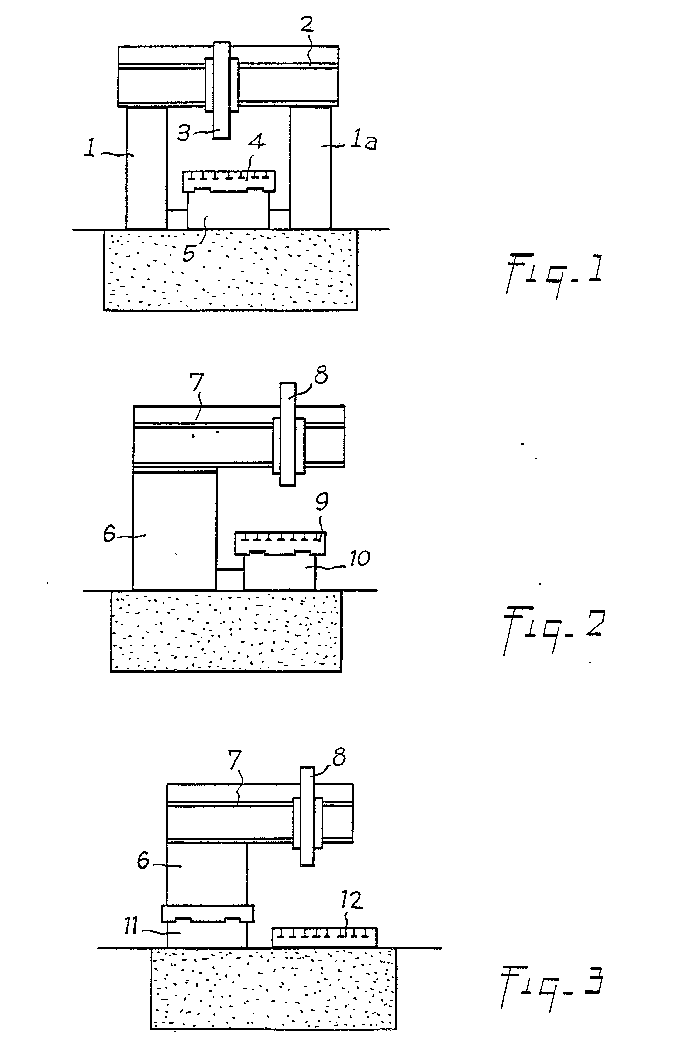

Les machines connues réalisées actuellement sont de divers types représentés aux figures 1 à 4.

A la figure 1 on a représenté une machine comportant deux montants 1, 1a qui supportent une traverse 2 fixe ou mobile en hauteur sur laquelle se déplace une tête coulissante verticale 3 qui est munie d'un porte-outil, ladite traverse étant disposée au-dessus d'une table mobile 4 reposant sur un banc fixe 5.

A la figure 2, on a représenté une machine comportant un montant 6 muni d'une traverse 7 fixe ou mobile en hauteur sur laquelle se déplace latéralement une tête coulissante verticale 8, ladite traverse étant disposée au-dessus d'une table mobile 9 reposant sur un banc fixe 10.

A la figure 3, on a représenté une machine comportant un banc 11 sur lequel se déplace horizontalement un montant 6 muni d'une traverse 7 fixe ou mobile en hauteur sur laquelle se déplace latéralement une tête coulissante verticale 8, ladite traverse étant disposée au-dessus d'une table fixe 12 ou taque reposant sur la fondation.

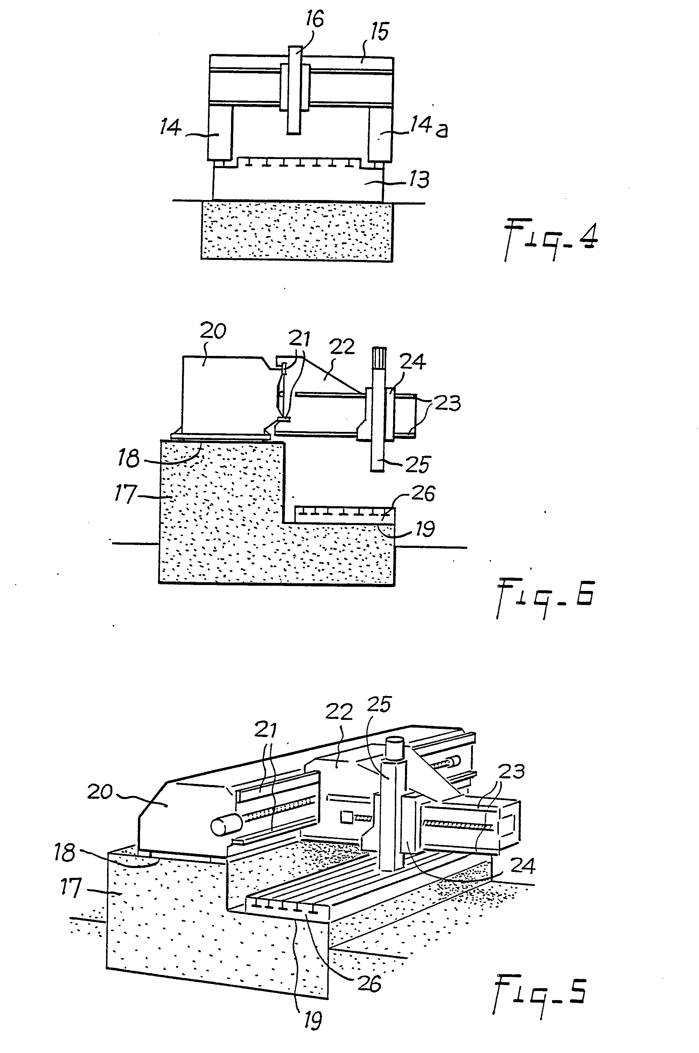

A la figure 4, on a représenté une machine comportant une table fixe 13 constituant un banc sur lequel se déplacent deux montants 14, 14a portant une traverse 15 fixe ou mobile en hauteur et sur laquelle se déplace une tête coulissante verticale.

Toutefois les machines représentées aux figures 1 et 4 à deux montants sont limitées en ce qui concerne la possibilité d'usiner des pièces larges.

Par ailleurs les machines représentées aux figures 2 et 3 à un seul montant et à structure ouverte permettent bien d'usiner des pièces larges, mais le montant présente des déformations de flexion et surtout de torsion.

De plus dans les machines à structure ouverte, le massif de fondation est très sollicité, notamment en flexion et cisaillement au droit du montant.

Il en résulte que la disposition des machines à structure ouverte ne donne pas toujours satisfaction en ce qui concerne la précision d'usinage pour les opérations de finition.

La machine perfectionnée suivant l'invention qui est à structure ouverte permet de remédier à ces inconvénients.

Bien entendu, cette machine perfectionnée met en oeuvre des moyens connus dont la combinaison la plus proche est enseignée par le brevet suisse numéro 446.856.

Ce brevet décrit une machine comportant un banc supérieur et une table fixe inférieure reliés par un montant usiné. Ce montant présente une glissière verticale pour le guidage d'un plateau (axe Z) et une glissière transversale haute pour le guidage d'un banc (axe X) le long des glissières longitudinales duquel est guidé un chariot (axe Y) équipé d'une broche porte-outil verticale.

La présente invention s'en distingue par le fait qu'elle comporte un massif monolithique de support non usiné, de préférence en béton, et reposant sur le sol, ce massif présentant deux plans de support supérieur et inférieur décalés en hauteur et latéralement pour recevoir respectivement le banc supérieur et la table inférieure, par le fait également que le chariot est monté coulissant, dans une direction transversale, le long de glissières d'une traverse horizontale s'étendant perpendiculairement au banc et monté coulissant, dans la direction longitudinale, le long des glissières de celui-ci, ce chariot étant équipé d'une tête porte-outil coulissant verticalement.

La machine outil suivant l'invention présente une structure très simple et elle comporte seulement deux pièces principales usinées et une table fixe ou taque qui permettent une réalisation de coût réduit.

La structure ouverte permet d'usiner des pièces larges, alors que la table fixe peut recevoir des pièces lourdes et permet le montage d'une pièce pendant l'usinage d'une autre pièce.

Il est possible de monter facilement donc rapidement de nombreux équipements tels que des renvois d'équerre, des têtes universelles, des allonges de broches.

La machine outil suivant l'invention présente une meilleure rigidité, donc une meilleure capacité d'usinage par rapport aux autres machines à structure ouverte représentées aux figures 2 et 3. A porte-à-faux égal, la suppression du montant élimine les déformations de flexion et surtout de torsion qui résultaient dudit montant.

Par rapport à la machine représentée à la figure 3 le dispositif suivant l'invention permet la suppression du montant et de sa table, d'où il résulte un prix de revient bien inférieur avec un banc fixe beaucoup plus largement dimensionné.

Dans la machine outil suivant l'invention, le massif bien que mieux dimensionné, travaille dans de meilleures conditions avec une meilleure répartition des charges grâce à la conception du banc fixe.

Suivant une autre caractéristique de l'invention sur la traverse mobile est monté à son extrémité libre un montant auxiliaire escamotable qui est susceptible de venir en appui par son extrémité inférieure sur la table fixe, de préférence contre une règle d'appui.

Cette disposition permet avec le montant auxiliaire sans démontage et sans règlage après sa remise en place d'obtenir une meilleure précision pour les opérations de finition par rapport aux machines à structure ouverte telles que celles représentées aux figures 2 et 3.

Cette disposition donne à la machine-outil suivant l'invention des performances de précision voisines de celles des machines à deux montants, tout en conservant pur les usinages standards les avantages de la structure ouverte.

Le changement de configuration est réalisé par l'opérateur sans perte de temps, ce qui n'est pas le cas des machines à un montant avec montant auxiliaire actuellement réalisées.

D'autres caractéristiques et avantages de l'invention seront mieux compris à la lecture de la description qui va suivre de plusieurs modes de réalisation et en se référant aux dessins annexés, sur lesquels :

-les figures 1 à 4 sont des vues en élévation de machines-outils à tête coulissante verticale de type connu,

-la figure 5 est une vue en perspective d'un mode de réalisation de la machine-outil suivant l'invention,

-la figure 6 est une vue en élévation latérale de la machine-outil suivant l'invention représentée à la figure 5,

-la figure 7 est une vue en élévation de face de la machine-outil représentée à la figure 6,

-la figure 8 est une vue de détail en élévation latérale montrant l'utilisation d'un montant auxiliaire escamotable,

-la figure 9 est une vue de détail en élévation de face montrant l'utilisation du montant auxiliaire.

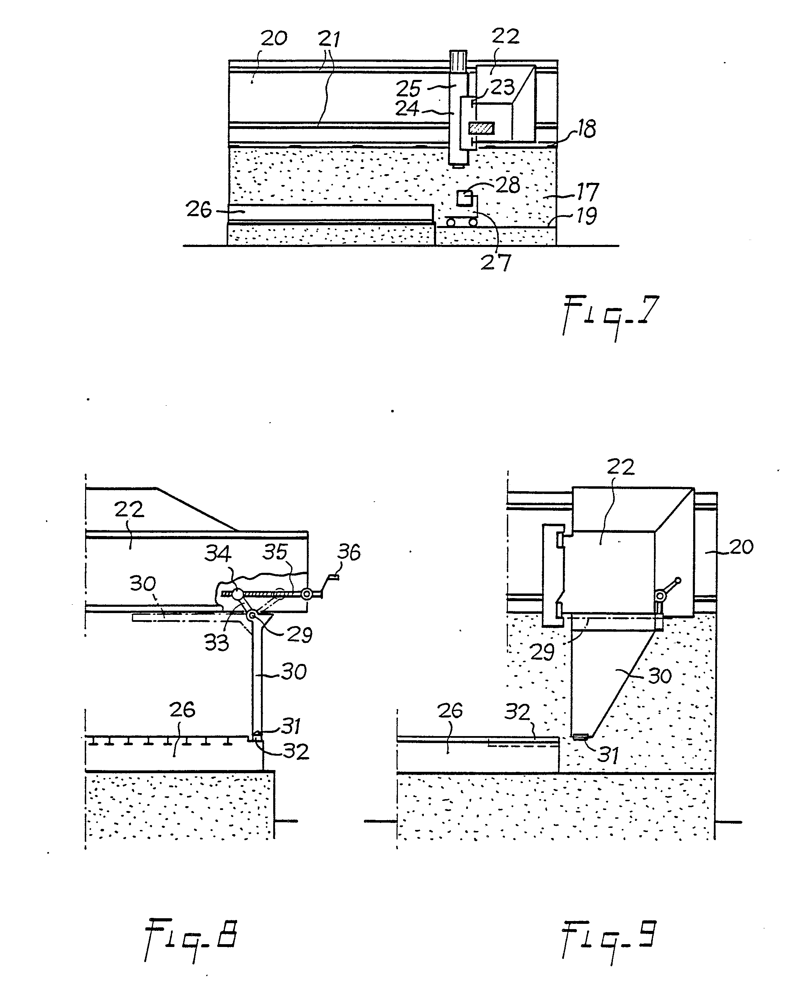

Aux figures 5, 6 et 7 on a représenté un mode de réalisation de la machine-outil suivant l'invention qui comprend un massif 17, notamment en béton, lequel est ancré dans le sol et s'étend au-dessus du sol pour former deux plans de support 18, 19 décalés en hauteur et latéralement.

Sur le plan supérieur 18, est fixé un banc 20 qui présente sur sa face avant dirigée en regard du plan 19 des glissières 21 sur lesquelles se déplace horizontalement une traverse mobile 22 qui est entraînée par des moyens connus disposés dans le banc 20.

La traverse mobile 22 comporte sur l'une de ses faces latérales des glissières 23 sur lesquelles se déplace horizontalement un chariot 24 portant une tête coulissante ou coulant 25 se déplaçant suivant un axe vertical et munie à sa partie inférieure d'une tête porte-outil.

Sur le plan inférieur 19 est fixée une table fixe ou taque 26 sur laquelle est fixée la pièce à usiner, ladite table fixe étant disposée au-dessous de la traverse mobile qui s'étend transversalement à celle-ci et qui se déplace ainsi longitudinalement au-dessus de ladite table 26 pour amener l'outil porté par la tête coulissante en n'importe quel endroit de ladite table en vue de l'usinage de la pièce montée sur la table.

Comme représenté à la figure 7, la table 26 ne s'étend que sur une partie du plan 19 et une autre partie 19a de ce plan est utilisée pour le déplacement d'un chariot 27 portant un accessoire d'usinage 28 destiné à être monté sur la partie inférieure de la tête coulissante 25.

A l'extrémité libre de la traverse mobile 22 est monté pivotant autour d'un axe horizontal 29 un montant auxiliaire 30 dont l'extrémité inférieure 31 est susceptible de venir en appui contre une règle d'appui 32 ménagée sur l'un des bords de la table 26.

Lorsque le montant 30 n'est pas utilisé, il est replié autour de l'axe 29 et vient occuper la position représentée en trait interrompu (figure 8).

Le déplacement du montant 30 autour de l'axe 29 peut être obtenu au moyen d'un bras 33 solidaire du montant et qui porte un écrou 34 engagé sur une tige filetée 35 montée rotative sur la traverse 22 et munie à l'une de ses extrémités d'une manivelle 36.

Bien entendu, le dispositif d'actionnement en pivotement du montant 30, au lieu d'être mécanique, peut être hydraulique, pneumatique, électrique ou autre. Dans ce cas, le système vis-écrou est remplacé ou bien par un vérin prenant appui sur la traverse et agissant sur le bras 33 ou bien par un moteur accouplé, éventuellement par l'intermédiaire d'un réducteur, à l'axe 29.

Le déplacement du montant 30 s'effectue lorsque la traverse mobile est en fin de course arrière comme représenté à la figure 9.

## Revendications

1.-Machine-outil pour le fraisage, l'alésage et le perçage, comprenant d'une part, un banc supérieur horizontal (20) muni de glissières (21) relativement auxquelles un chariot - (24) équipé d'une broche porte-outil (25) est susceptible de se déplacer longitudinalement et, d'autre part, une table inférieure fixe (26) ou taque située dans l'espace balayé par la tête, cette machine-outil étant caractérisée :

-en ce qu'elle comporte un massif monolithique de support - (17) non usiné, de préférence en béton, et reposant sur le sol, ce massif présentant deux plans de support supérieur - (18) et inférieur (19) décalés en hauteur et latéralement pour recevoir respectivement le banc supérieur (20) et la table inférieure (26),

-et en ce que le chariot (24) est monté coulissant, dans une direction transversale le long de glissières (23) d'une traverse horizontale (22) s'étendant perpendiculairement au banc (20) et monté coulissant, dans la direction longitudinale, le long des glissières (21) de celui-ci, ce chariot étant équipé d'une tête port-outil (25) coulissant verticalement.

2.-Machine-outil suivant la revendication 1, caractérisée en ce que, sur la traverse mobile (22), est monté à son extrémité libre un montant auxiliaire escamotable (30) qui est susceptible de venir en appui par son extrémité inférieure (31) sur la table fixe (26), de préférence contre une règle d'appui (32).

3.-Machine-outil suivant la revendication 2, caractérisée en ce que le montant (30) est articulé à sa partie supérieure sur la traverse (22) suivant un axe horizontal (29) et relié à un dispositif d'actionnement en pivotement entre une position horizontale d'escamotage et une position verticale de support.

4.-Machine-outil suivant la revendication 3, caractérisée en ce que le dispositif d'actionnement est mécanique et comprend un écrou (34) porté par un bras (33) et coopérant avec une tige filetée (35) montée rotative sur la traverse - (22) et munie à l'une de ses extrémités d'une manivelle (36).

5.-Machine-outil suivant la revendication 3, caractérisée en ce que le dispositif d'actionnement est hydraulique, pneumatique, électrique ou autre et comporte un vérin prenant appui sur la traverse mobile et relié à un bras (33) solidaire du montant (30).

6.-Machine-outil suivant la revendication 3, caractérisée en ce que le dispositif d'actionnement est hydraulique, pneumatique, électrique ou autre et comporte un moteur accouplé à l'axe (29) du montant.

2

3

1

4

1a

5

Fig.1

7

8

6

9

10

Fig_2

7

8

6

11

12

Fig_3

0 194 173

Fig-4

Fig-6

Fig-5

Fig-7

Fig-8

Fig-9